(19) Europäisches Patentamt
European Patent Office
Office européen des brevets

(11) **EP 2 228 671 B1**

(12) **EUROPÄISCHE PATENTSCHRIFT**

(45) Veröffentlichungstag und Bekanntmachung des Hinweises auf die Patenterteilung:
**28.05.2014 Patentblatt 2014/22**

(51) Int Cl.:
*G02B 5/30* *(2006.01)*     *B42D 15/00* *(2006.01)*
*G07D 7/12* *(2006.01)*

(21) Anmeldenummer: **10002385.2**

(22) Anmeldetag: **08.03.2010**

(54) **Sicherheitselement**

Safety element

Elément de sécurité

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.03.2009   DE 102009012299**

(43) Veröffentlichungstag der Anmeldung:
**15.09.2010   Patentblatt 2010/37**

(73) Patentinhaber: **Giesecke & Devrient GmbH**
**81677 München (DE)**

(72) Erfinder: **Lochbihler, Hans**
**80333 München (DE)**

(56) Entgegenhaltungen:
**EP-A1- 0 721 116        EP-A2- 1 241 490**
**DE-A1-102006 052 413    DE-C1- 4 421 407**
**US-A- 4 484 797**

• **PANG ET AL: "Optical transmission through subwavelength slit apertures in metallic films" OPTICS COMMUNICATIONS, NORTH-HOLLAND PUBLISHING CO. AMSTERDAM, NL LNKD- DOI: 10.1016/J.OPTCOM.2007.07.063, Bd. 280, Nr. 1, 13. Oktober 2007 (2007-10-13), Seiten 10-15, XP022297998 ISSN: 0030-4018**
• **Hans Lochbihler: "Enhanced transmission of TE polarized light through wire gratings", Physical Review B, vol. 79, no. 24, 1 June 2009 (2009-06-01), XP055089766, ISSN: 1098-0121, DOI: 10.1103/PhysRevB.79.245427**

EP 2 228 671 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Sicherheitselement für Sicherheitspapiere, Wertdokumente und dergleichen, einen Datenträger mit einem derartigen Sicherheitselement und ein Verfahren zur Echtheitsprüfung eines Sicherheitselements.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens oder eines selbsttragenden Transferelements ausgebildet sein, das nach seiner Herstellung auf ein Wertdokument aufgebracht wird.

In bekannten Sicherheitselementen werden zur Farbfilterung oder Farberzeugung im sichtbaren Spektralbereiche derzeit folgende Strukturen einsetzt: Interferenzfilter aus Schichten mit unterschiedlichem Brechungsindex, perforierte Folien, photonische Kristalle sowie Gitterstrukturen, in denen durch die einfallende Strahlung Oberflächenplasmon-Polaritonen angeregt werden. All diesen optischen Strukturen ist gemein, dass die Wellenlänge des Transmissionsmaximums bzw. die Wellenlänge des Absorptionsmaximums vom Einfallswinkel des einfallenden Lichtes abhängt. Für zunehmend schräge Einfallswinkel verschiebt sich die Bandpasscharakteristik dabei in den längerwelligen Bereich und führt so zu Farbveränderungen.

Die Aufgabe der vorliegenden Erfindung liegt nun darin, ein gattungsgemäßes Sicherheitselement anzugeben, das die Nachteile des Standes der Technik vermeidet. Insbesondere soll das Sicherheitselement neuartige Farbeffekte aufweisen und ein visuell attraktives Erscheinungsbild mit hoher Fälschungssicherheit verbinden.

Diese Aufgabe wird durch das Sicherheitselement, den Datenträger, die Verwendung und die Verfahren zur Echtheitsprüfung der unabhängigen Ansprüche gelöst. Weiterbildungen der Erfindung sind Gegenstand der Unteransprüche.

Gemäß der Erfindung enthält ein gattungsgemäßes Sicherheitselement ein Bandpassfilter für Licht aus dem sichtbaren Spektralbereich, das ein metallisches Drahtgitter aus einer Mehrzahl paralleler, beabstandet angeordneter Metalldrähte mit einer Gitterperiode von weniger als 1 $\mu$m umfasst, und das beim Kippen des Sicherheitselements in TE-polarisiertem Licht ein farbkonstantes visuelles Erscheinungsbild zeigt. TE-Polarisation bedeutet dabei, dass der E-Vektor von einfallendem linear polarisiertem Licht parallel zu den Metalldrähten des Drahtgitters ist. Die zur TE-Polarisation senkrechte Polarisationsrichtung wird als TM-Polarisation bezeichnet. Der allgemeine Fall von unpolarisiertem Licht kann als Überlagerung von Licht dieser beiden fundamentalen Polarisationsrichtungen beschrieben werden.

Unter die Bezeichnung "metallisches Drahtgitter" fallen im Rahmen der Erfindung insbesondere Strukturen mit z-förmigem Metallprofil, die auf zwei verschiedenen Höhenstufen beanstandete Metalldrähte aufweisen. Auch Metallfilme mit einer Mehrzahl paralleler Schlitze fallen unter den Begriff eines metallischen Drahtgitters. Die Metalldrähte sind in diesem Fall durch die stehen gebliebenen Bereiche des Metallfilms gebildet, während die parallelen Schlitze die Zwischenräume der beabstandeten Metalldrähte bilden. In anderen Gestaltungen können die Metalldrähte auch durch mit metallischen Nanopartikeln gefüllte Gräben eines dielektrischen Gitters gebildet sein.

Entsprechend der Erfindung zeigt das Bandpassfilter beim Kippen des Sicherheitselements in TM-polarisiertem Licht ein farbvariables visuelles Erscheinungsbild. Das erfindungsgemäße Sicherheitselement erzeugt somit bei Betrachtung in linear polarisiertem Licht je nach der relativen Orientierung des Polarisationsvektors und den Metalldrähten des Drahtgitters einen unterschiedlichen visuellen Eindruck, zeigt nämlich einerseits beim Kippen ein farbkonstantes und andererseits ein farbvariables Erscheinungsbild. Durch Kippen des Sicherheitselements und Drehen eines Polarisators lässt sich somit eine leicht zu merkende und visuell ansprechende Echtheitsprüfung durchführen.

Wie nachfolgend genauer erläutert, basiert das farbkonstante visuelle Erscheinungsbild auf den Transmissionseigenschaften bestimmter Drahtgitter für TE-polarisiertes Licht. Insbesondere werden bei TE-Polarisation, anders als bei TM-Polarisation, keine Oberflächenplasmon-Polaritonen im Drahtgitter erzeugt, so dass höhere Transmissionswerte erreicht werden können. In vorteilhaften Ausgestaltungen weist das Bandpassfilter im sichtbaren Spektralbereich ein Transmissionsmaximum mit einer Transmission bei senkrechtem Lichteinfall von 40% oder mehr, bevorzugt von 50% oder mehr, besonders bevorzugt von 60% oder mehr auf. Hierdurch können für diese Polarisationsrichtung aufgrund der verringerten Absorption wesentliche höhere Farbintensitätskontraste erzielt werden.

Die Gitterperiode des Drahtgitters liegt im Rahmen der Erfindung zwischen 200 nm und 700 nm, die Breite der Zwischenräume zwischen den Metalldrähten liegt zwischen 100 nm und 400 nm, und die Höhe der Metalldrähte liegt zwischen 100 nm und 2000 nm. Die große Bandbreite geeigneter Werte ergibt sich dabei vor allem aus der Bandbreite der Brechungsindices der Materialien, in die das Drahtgitter eingebettet sein kann und die von 1,0 für Luft bis zu etwa 1,9 für hochbrechende Dielektrika reicht.

Entsprechend der Erfindung ist die Breite der Metalldrähte kleiner als die Breite der Zwischenräume zwischen den Metalldrähten um sicherzustellen, dass die Resonanz in TE-Polarisation der dominierende Effekt der Farbgebung des Drahtgitters ist.

Als Metalle werden im Rahmen der Erfindung vorzugsweise Aluminium, Gold, Silber, Kupfer, Palladium und Legierungen dieser Metalle eingesetzt. Darüber hinaus sind auch Metalle, wie Chrom, Nickel oder Wolfram, die im Sichtbaren ein höheres Absorptionsverhalten zeigen, und deren Legierungen einsetzbar.

Die erfindungsgemäßen Bandpassfilter können auch in ein Dielektrikum mit Brechungsindex n eingebettet sein, wobei n für die meisten Dielektrika zwischen 1,4 und 1,9 liegt. Die Filtereigenschaften von derartigen, eingebetteten Drahtgittern entsprechen im Wesentlichen denen frei stehender Drahtgitter, wobei die Resonanz bzw. das Transmissionsmaximum in der Bandpasscharakteristik um den Faktor n zu größeren Wellenlängen verschoben ist, wie weiter unten genauer beschrieben. Solche eingebettete Drahtgitter eignen sich besonders gut für eine kostengünstige Massenproduktion. In einer besonders bevorzugten Ausgestaltung ist das Bandpassfilter zwischen ein dielektrisches Substrat und ein dielektrisches Superstrat eingebettet, wobei sich die Brechungsindices von Substrat und Superstrat im sichtbaren Spektralbereich um weniger als 0,1 unterscheiden.

Das metallische Drahtgitter des Sicherheitselements kann einen rechteckigen Querschnitt aufweisen oder auch mit einem z-förmigen Metallprofil ausgebildet sein. Gitter mit z-förmigem Metallprofil können durch schräges Bedampfen geprägter Lackschichten besonders einfach und kostengünstig hergestellt werden. Das metallische Drahtgitter kann insbesondere als eine Binärstruktur oder als Multilevelstruktur ausgebildet sein, die ausschließlich ebene metallische Flächenabschnitte auf N verschiedenen Höhenstufen enthält. Der Wert für N kann dabei gleich 2 sein (Binärstruktur) oder insbesondere zwischen 3 und 16 liegen (Multilevelstruktur). Daneben kann der Profilquerschnitt der Drahtgitter auch von einer Rechteckform abweichen und beispielsweise eine Trapezform bzw. gerundete Kanten aufweisen. Auch metallische Drahtgitter in Gestalt einer Metallschicht mit einer Mehrzahl paralleler Schlitze kommen in Betracht.

In einer vorteilhaften Erfindungsvariante ist das Sicherheitselement auf Betrachtung in Durchsicht ausgelegt und zeigt in TE-polarisiertem Licht in Durchsicht ein farbiges, beim Kippen des Sicherheitselements farbkonstantes visuelles Erscheinungsbild. In anderen Gestaltungen ist das Sicherheitselement auf Betrachtung in Aufsicht ausgelegt und zeigt in TE-polarisiertem Licht in Aufsicht ein farbiges, beim Kippen des Sicherheitselements farbkonstantes visuelles Erscheinungsbild.

Bei einer vorteilhaften Weiterbildung der Erfindung zeigt das Sicherheitselement ein farbiges Motiv mit Motivteilen unterschiedlicher Farbe, wobei die Motivteile durch Bandpassfilter mit unterschiedlicher Breite der Zwischenräume zwischen den Metalldrähten und/oder unterschiedlichem Profil der Metalldrähte des jeweiligen metallischen Drahtgitters gebildet sind.

Das farbige Motiv kann auch ein Mikromotiv mit einer Abmessung zwischen etwa 5 μm und etwa 50 μm, insbesondere zwischen etwa 10 μm und etwa 35 μm sein, wobei das Sicherheitselement in diesem Fall in der Regel eine Anordnung von Mikrolinsen zur vergrößerten Betrachtung des Mikromotivs enthält. Beispiele derartiger Sicherheitselemente mit Mikromotiven stellen mikrooptische Moiré-Vergrößerungsanordnungen dar, wie sie in den Druckschriften DE 10 2005 062132 A1 und WO 2007/076952 A2 beschrieben sind, mikrooptische Vergrößerungsanordnung vom Moirétyp, wie sie in den Anmeldungen DE 10 2007 029 203.3 und PCT/EP2008/005173 beschrieben sind, sowie Modulo-Vergrößerungsanordnungen, wie sie in der Anmeldung PCT/EP2008/005172 beschrieben sind.

Gemäß einer anderen Weiterbildung der Erfindung enthält das Bandpassfilter zwei übereinander angeordnete, parallele oder in der Ausrichtung der Metalldrähte gegeneinander gedrehte Drahtgitter. Die beiden Drahtgitter sind dabei insbesondere um 90° gegeneinander gedreht.

Das Bandpassfilter kann in dem Sicherheitselement selbst mit einem Linearpolarisator kombiniert sein, insbesondere einem Linearpolarisator der, bezogen auf die Ausrichtung der Metalldrähte des Drahtgitters, TE-polarisiertes Licht durchlässt. Der farbkonstante visuelle Eindruck beim Kippen zeigt sich dann ohne ein zusätzliches Prüfelement.

Das Bandpassfilter kann ferner zwei oder mehr Drahtgitter enthalten, die in gleicher Orientierung oder in verdrehter Orientierung übereinanderliegen. Beispielsweise kann ein Drahtgitter auf der Vorderseite und ein weiteres Drahtgitter an der derselben Stelle auf der Rückseite einer transparenten Folie vorgesehen sein. Bei der Variante mit einer parallelen Ausrichtung der Metalldrähte ist der Filtereffekt in TE-Polarisation verstärkt. Eine optimale Bandpassfilterung von unpolarisiertem Licht erhält man dagegen, wenn die Metalldrähte der übereinanderliegenden Gitter um 90° gegeneinander gedreht sind.

Die Erfindung enthält auch einen Datenträger mit einem Sicherheitselement der beschriebenen Art. Der Datenträger ist dabei insbesondere ein Wertdokument, wie zum Beispiel eine Banknote, ein Scheck, eine Aktie, ein Ausweis, eine Eintrittskarte, eine Fahrkarte, eine Urkunde, eine Kreditkarte, eine Scheckkarte oder dergleichen. Die erfindungsgemäße optisch variable Struktur ist innerhalb eines Datenträgers mit jedem beliebigen anderen Sicherheitsmerkmal kombinierbar.

In einer Weiterbildung der Erfindung sind auf dem Datenträger das Bandpassfilter und ein Linearpolarisator angeordnet, wobei Bandpassfilter und Linearpolarisator zur Echtheitsprüfung durch Biegen, Falten, Knicken oder Klappen des Datenträgers übereinanderlegbar sind.

Gegenstand der vorliegenden Erfindung ist weiter die Verwendung eines metallischen Drahtgitters entsprechend Anspruch 1 in einem Sicherheitselement als Bandpassfilter für Licht aus dem sichtbaren Spektralbereich. Das Sicherheitselement kann dabei insbesondere ein farbiges Motiv mit Motivteilen unterschiedlicher Farbe zeigen, bei dem die Motivteile durch Bandpassfilter mit unterschiedlicher Gitterperiode und/oder unterschiedlichem Profil der Metalldrähte des jeweiligen metallischen Drahtgitters gebildet sind.

Die Erfindung enthält weiter ein Verfahren zur Echtheitsprüfung eines Sicherheitselements entsprechend Anspruch 1, bei dem das Sicherheitselement in linear polarisiertem Licht gekippt und der Farbeindruck des Sicherheitselements beim Kippen erfasst wird, und bei dem ein farbkonstantes visuelles Erscheinungsbild als Zeichen der Echtheit des Sicherheitselements gewertet wird. Zur Erzeugung des linear polarisierten Lichts wird vorzugsweise ein Linearpolarisator auf das Sicherheitselement gelegt und der Farbeindruck der kombinierten Anordnung aus Linearpolarisator und Sicherheitselement erfasst.

Bei einem weiteren Verfahren zur Echtheitsprüfung eines Sicherheitselements wird das Sicherheitselement nacheinander in linear polarisiertem Licht einer ersten Polarisationsrichtung und einer zweiten, zur ersten Polarisationsrichtung senkrechten Polarisationsrichtung gekippt und jeweils der Farbeindruck des Sicherheitselements beim Kippen erfasst. Dabei werden ein farbkonstantes visuelles Erscheinungsbild bei einer der beiden Polarisationsrichtungen und ein farbvariables visuelles Erscheinungsbild bei der anderen der beiden Polarisationsrichtungen als Zeichen der Echtheit des Sicherheitselements gewertet. Zur Erzeugung des linear polarisierten Lichts der ersten bzw. zweiten Polarisationsrichtung wird vorzugsweise ein Linearpolarisator in zueinander um 90° gedrehten Orientierungen auf das Sicherheitselement gelegt und jeweils der Farbeindruck der kombinierten Anordnung aus Linearpolarisator und Sicherheitselement erfasst.

Ferner kann eine Echtheitsprüfung eines solchen Sicherheitselements mit Hilfe von zwei um 90° zueinander orientierten Polarisatoren erfolgen. Dazu wird das zu prüfende Sicherheitselement zwischen zwei, um 90° gegeneinander gedrehte Linearpolarisatoren gebracht und der Farbeindruck des Sicherheitselements beim Drehen erfasst. Ein vorbestimmter Farbeindruck bei einer vorbestimmten Drehstellung wird dann als Zeichen der Echtheit des Sicherheitselements gewertet.

Das erfindungsgemäße Bandpassfilter eignet sich insbesondere zur Filterung von diffus einfallendem Licht oder von Licht in konvergenten Strahlengängen, da seine Bandpasscharakteristik weitgehend unabhängig vom Einfallswinkel ist. Da die Filterwirkung nicht auf der Erzeugung von Oberflächenplasmon-Polaritonen basiert, können aufgrund der geringeren Verluste zudem bessere Transmissionseigenschaften erreicht werden.

Die exemplarische Verwendung der beschriebenen metallischen Drahtgitter ist nicht auf die Nutzung bei Sicherheitselementen beschränkt; vielmehr können sie in allen Bereichen verwendet, in denen Bandpassfilter für Licht aus dem sichtbaren Spektralbereich benötigt werden, beispielsweise in der Lichtfilterung in der Anzeigetechnik.

Metallische Drahtgitter, die für das Sicherheitselement gemäß der vorliegenden Erfindung geeignet sind, können beispielsweise erhalten werden, indem eine dielektrische Oberfläche, z.B. ein UV-Lack, mittels polarisierter, fokussierter, ultrakurzer Laserpulse (Femtosekunden-Laser) so bestrahlt wird, dass sich infolge von Elektronenplasmaanregungen eine Grabengitterstruktur ausbildet, und anschließend eine metallische Bedampfung der so erzeugten Grabengitteroberfläche durchgeführt wird. Ein alternatives Verfahren zur Herstellung von metallischen Drahtgittern beruht auf einer metallischen Bedampfung einer dielektrischen Oberfläche, die zur Erzeugung eines zusammenhängenden Metallfilms führt. Der Metallfilm wird anschließend durch polarisierte, fokussierte, ultrakurze Laserpulse so bestrahlt, dass sich der zusammenhängende Metallfilm durch die Absorption der Laserstrahlung infolge von Oberflächenpolaritonenanregung in eine periodische Drahtgitterstruktur umwandelt. Ein weiteres alternatives Verfahren zur Herstellung von metallischen Drahtgittern beruht auf einer senkrechten metallischen Bedampfung einer in einem Dielektrikum, z.B. ein UV-Lack, abgeformten Gitterstruktur. Die auf den Plateaus befindlichen Metallflächen werden anschließend mit einem Medium, dessen Adhäsion mit dem Metall größer als die Adhäsion der Metallflächen mit der dielektrischen Gitteroberfläche ist, kontaktiert. Danach werden die Metallflächen durch mechanische Ablösung mit Hilfe des aufgebrachten Mediums entfernt. Schließlich verbleiben nur die in den Gräben befindlichen Metallstege auf der Gitterstruktur. Vorzugsweise wird die abgeformte Gitterstruktur vor der metallischen Bedampfung mit einer dünnen, schlecht haftenden Schicht überzogen. Dies ist beispielsweise eine 10 nm dicke ZnS- oder $TiO_2$-Schicht, die durch Bedampfen aufgebracht wird. Nach der metallischen Bedampfung werden die auf den Stegen befindlichen Metallflächen mit einem Medium kontaktiert, dessen Haftung an das Metall stärker als die Haftung des Metalls an der dünnen Trennschicht ist. Anschließend wird das Medium entfernt und dabei die Metallflächen von den Stegen abgelöst. Somit verbleiben nur die in den Gräben befindlichen Metallstege auf der Gitterstruktur. Der physikalische Prozess der Ausbildung von Gittern durch ultrakurze Laserpulse ist in der Literatur beschrieben (siehe z.B.: Y. Shimotsuma, P. G. Kazansky, J. Qiu, K. Hirao, Phys. Rev. Lett., 2003, Vol. 91, Number 24, 247405).

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen. Die verschiedenen Ausführungsbeispiele sind nicht auf die Verwendung in der konkret beschriebenen Form beschränkt, sondern können auch untereinander kombiniert werden.

Es zeigen:

Fig. 1     eine schematische Darstellung einer Banknote mit einem erfindungsgemäßen Sicherheitselement,

Fig. 2     eine schematische Darstellung eines erfindungsgemäßen Bandpassfilters zur Erläuterung des Zustandekommens des Farbeffekts,

Fig. 3     die berechnete Transmission eines erfindungsgemäßen Bandpassfilters mit einem Drahtgitter aus Aluminiumdrähten (Gitterperiode $a_0$ = 500 nm, Breite b = 225 nm, Höhe h = 250 nm) in Abhängigkeit von der Wellenlänge des einfallenden TEpolarisierten Lichts für Einfallswinkel zwischen 0° (senkrechter Lichteinfall) und 60°,

Fig. 4     die Echtheitsprüfung eines erfindungsgemäßen Durchsichtssicherheitselements mit einem Linearpolarisator,

Fig. 5     einen Querschnitt durch ein erfindungsgemäßes Bandpassfilter mit z-förmigem Metallprofil,

Fig. 6     in (a) die berechnete Transmission und in (b) die berechnete Reflexion eines in ein Dielektrikum mit n = 1,5 eingebetteten Bandpassfilters mit einem metallischen Drahtgitter aus Aluminiumdrähten (Gitterperiode $a_0$ = 300 nm, Höhe h = 200 nm) in Abhängigkeit von der Wellenlänge des einfallenden TEpolarisierten Lichts für verschiedene Drahtbreiten von b = 100 nm bis b = 180 nm,

Fig. 7     eine Aufsicht auf ein erfindungsgemäßes Sicherheitselement, das ein farbiges Motiv mit verschiedenfarbigen Motivteilen aufweist,

Fig. 8     die berechnete Transmission von unpolarisiertem Licht bei senkrechtem Einfallswinkel für ein in ein Dielektrikum mit n = 1,5 eingebettetes Aluminium-Drahtgitter (Gitterperiode $a_0$ = 300 nm, Breite b = 100 nm) für verschiedene Drahthöhen von h = 100 nm bis h = 500 nm, und

Fig. 9     die berechnete Transmission von unpolarisiertem Licht bei senkrechtem Einfallswinkel für zwei übereinanderliegende Drahtgitter mit den Parametern von Fig. 8, die gegeneinander um 90° gedreht sind.

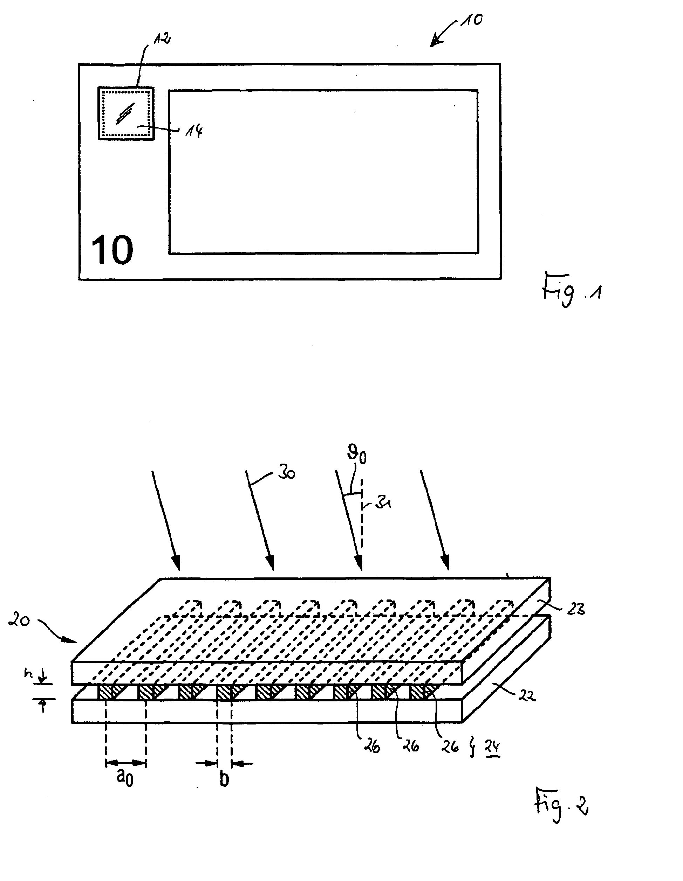

Die Erfindung wird nun am Beispiel von Sicherheitselementen für Banknoten erläutert. Fig. 1 zeigt dazu eine schematische Darstellung einer Banknote 10 mit einem Durchsichtssicherheitselement 12, das über einem Durchsichtsbereich, etwa einem Fensterbereich oder einer durchgehenden Öffnung 14 der Banknote 10, angeordnet ist.

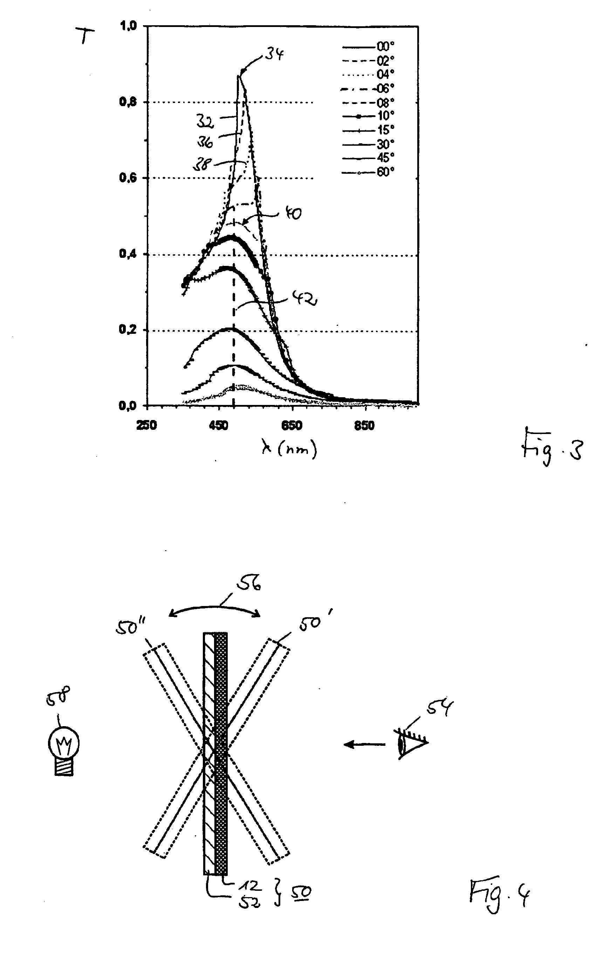

Das Durchsichtssicherheitselement 12 zeigt bei Betrachtung in polarisiertem Licht einen neuartigen Farbeffekt, der wesentlich auf einem speziellen, aus einem metallischen Drahtgitter gebildeten Bandpassfilter 20 beruht. Die grundsätzliche Funktionsweise des Bandpassfilters 20 und das Zustandekommen des Farbeffekts werden zunächst unter Bezugnahme auf die schematische Darstellung der Fig. 2 und das Transmissionsdiagramm der Fig. 3 erläutert.

Das Bandpassfilter 20 enthält eine Trägerfolie 22, auf die ein metallisches Drahtgitter 24 aus einer Mehrzahl paralleler, beabstandet angeordneter Metalldrähte 26 angeordnet ist. Das Drahtgitter 24 wird durch eine Deckfolie 23 geschützt, die vorzugsweise denselben Brechungsindex wie die Trägerfolie 22 aufweist. Im Ausführungsbeispiel bestehen die Metalldrähte 26 aus Aluminium, die Breite b der Metalldrähte beträgt b = 225 nm, die Gitterperiode $a_0$ des Drahtgitters $a_0$ = 500 nm und die Höhe h der Metalldrähte beträgt h = 250 nm.

In Fig. 2 ist die Beaufschlagung des Bandpassfilters 20 mit TE-polarisiertem Licht 30 gezeigt, dessen zur senkrechten Einfallsrichtung 31 gemessener Einfallswinkel mit $\theta_0$ bezeichnet ist. Dabei bedeutet TE-Polarisation, dass der E-Vektor des einfallenden Lichts parallel zu den Metalldrähten 26 liegt. Anders als bei TM-polarisiertem Licht, bei dem der E-Vektor des einfallenden Lichts senkrecht auf den Metalldrähten 26 steht, werden bei dem Einfall von TE-polarisiertem Licht keine Oberflächenplasmon-Polaritonen in dem Drahtgitter 24 erzeugt, da keine Komponente des E-Feldes vorliegt, die senkrecht zur Metalloberfläche schwingt und dabei die Metallelektronen zur Resonanz bringt.

Bei senkrechtem Lichteinfall, also $\theta_0$ = 0°, weist das Bandpassfilter 20 ein Transmissionsmaximum im sichtbaren Spektralbereich bei einer Wellenlänge $\lambda$ auf, die etwa der Gitterperiode $a_0$ = 500 nm des Drahtgitters entspricht. Wie aus der berechneten Transmissionskurve 32 der Fig. 3 ersichtlich, transmittiert das Bandpassfilter 20 bei $\lambda$ = 500 nm fast 90% des einfallenden Lichts (Transmissionspeak 34). Zu größeren und kleineren Wellenlängen hin fällt die Transmission stark ab, so dass das Bandpassfilter 20 in Durchsicht insgesamt mit einem grünen Farbeindruck erscheint.

Die Wellenlänge maximaler Transmission bei senkrechtem Lichteinfall entspricht der Wellenlänge der Rayleigh- oder Wood-Anomalie, bei der die höheren Beugungsordnungen evaneszent werden. Wird das Bandpassfilter 20 um wenige Grad gekippt, oder wird äquivalent der Einfallswinkel des Lichts um wenige Grad aus der Senkrechten gekippt, so verschiebt sich der scharfe Transmissionspeak 34 gemäß der Dispersionsbeziehung der Rayleigh-Anomalie

$$\lambda = d/m \, (1 \pm \sin \theta_0),$$

mit m der Ordnung der evaneszenten Welle, zu größeren Wellenlängen. Dieses Verhalten ist in Fig. 3 an den Transmissionskurven 36 (für $\theta_0 = 2°$) und 38 (für $\theta_0 = 4°$) deutlich zu erkennen.

Für Einfallswinkel $\theta_0$ oberhalb von etwa 5° tritt ein zweiter Transmissionspeak 40 in Erscheinung, der ein Maximum bei einer Wellenlänge von etwa 500 nm hat und der mit größer werdendem Einfallswinkel $\theta_0$ die Transmissionskurven zunehmend dominiert. Anders als die aus der Beaufschlagung von Drahtgittern mit TM-polarisiertem Licht bekannten Resonanzen verändert der zweite Transmissionspeak 40 seine Lage 42 mit zunehmendem Einfallswinkel praktisch nicht. Dieses Verhalten ist in Fig. 3 an den gezeigten Transmissionskurven für Einfallswinkel bis hin zu $\theta_0 = 60°$ gut zu erkennen.

Da beim Einfall TE-polarisierten Lichts im Gegensatz zu TM-polarisiertem Licht keine Oberflächenplasmon-Polaritonen im Drahtgitter 24 erzeugt werden, wird weniger Licht absorbiert und daher eine bessere Transmission als bei der Filterung von TM-polarisiertem Licht erreicht. Zugleich eignet sich das Bandpassfilter 20 aufgrund der Unabhängigkeit der Filtercharakteristik vom Einfallswinkel $\theta_0$ in TE-polarisiertem Licht insbesondere zur Filterung von diffus einfallendem Licht. In TE-polarisiertem Licht zeigt das Bandpassfilter beim Kippen ein farbkonstantes visuelles Erscheinungsbild. Aufgrund dieser Eigenschaften lassen sich mit solchen Bandpassfiltern, wie der gegenwärtige Erfinder erkannt hat, Sicherheitselemente mit visuell attraktiven Farbeffekten erzeugen, die nachfolgend anhand einiger konkreter Ausführungsbeispiele beispielhaft illustriert sind.

Bei dem Ausführungsbeispiel der Fig. 4 enthält ein erfindungsgemäßes Durchsichtssicherheitselement 12 ein Bandpassfilter 20 der in Fig. 2 gezeigten Art, bei dem das metallische Drahtgitter 24 aus einer Mehrzahl paralleler Golddrähte 26 mit einer Gitterperiode von $a_0$ = 500 nm gebildet ist. Das Gitterprofil entspricht grob einem Rechteckprofil mit einer Breite b = 300 nm und einer Höhe h = 280 nm der Golddrähte.

Zur Echtheitsprüfung wird ein Linearpolarisator 52 auf das Durchsichtssicherheitselement 12 gelegt, der so orientiert ist, dass er, bezogen auf die Ausrichtung der Metalldrähte 26 des Bandpassfilters 20, nur TE-polarisiertes Licht durchlässt. Im Durchlicht 58 erzeugt die Anordnung 50 aus Linearpolarisator 52 und Durchsichtssicherheitselement 12 für den Betrachter 54 beim Kippen 56 der Anordnung 50 ein farbkonstantes, im Ausführungsbeispiel grünes, visuelles Erscheinungsbild, das unabhängig von der Lage 50, 50', 50" der Anordnung ist. Die Anordnung 50 wird dabei vorzugsweise gegen Tageslicht oder eine künstlichen Lichtquelle 58 mit tageslichtähnlichem Spektrum betrachtet. Weicht das Spektrum der Lichtquelle 58 vom Tageslichtspektrum ab, so wird sich im Allgemeinen der Farbeindruck für den Betrachter gegenüber dem genannten grünen Eindruck etwas verschieben, was jedoch für die Echtheitsprüfung ohne Bedeutung ist.

Wird der Linearpolarisator 52 dann um 90° gedreht, so dass er, bezogen auf die Ausrichtung der Metalldrähte 26 des Bandpassfilters 20, nur TM-polarisiertes Licht durchlässt, so ergibt sich für den Betrachter ein völlig anderer visueller Eindruck. Bei senkrechter Betrachtung gegen das Tageslicht erscheint die Anordnung 50 blau und der Farbeindruck ändert sich beim Kippen um etwa 15° in jede Richtung (Lage 50' oder 50") rasch von Blau zu Gelb und wird bei größeren Kippwinkeln schließlich Rot. Diese Farbänderungen lassen sich durch numerische Berechnungen für das Emissionsspektrum einer Normlichtquelle D65 unter Einbeziehung der spektralen Empfindlichkeit des menschlichen Auges korrekt reproduzieren. Bei einer Lichtquelle 58 mit einem vom Tageslicht abweichenden Spektrum wird sich im Allgemeinen der Farbeindruck für den Betrachter gegenüber der geschilderten Farbänderung etwas verschieben, ohne dass dies für die Echtheitsprüfung von grundsätzlicher Bedeutung wäre. Der Unterschied zwischen dem farbkonstanten Erscheinungsbild bei einer Polarisatorstellung und dem farbvariablen Erscheinungsbild bei der gedrehten Polarisatorstellung ist in jedem Fall klar erkennbar.

Der deutliche Unterscheid im Kippverhalten je nach Orientierung des Linearpolarisators 52 stellt ein für jedermann leicht memorierbares und nachvollziehbares Echtheitsmerkmal des Sicherheitselements 12 bzw. eines damit versehenen Wertdokuments dar. Gleichzeitig ist der Effekt ohne Kenntnis des zugrunde liegenden physikalischen Prinzips schwer nachzustellen und bietet daher auch eine hohe Fälschungssicherheit.

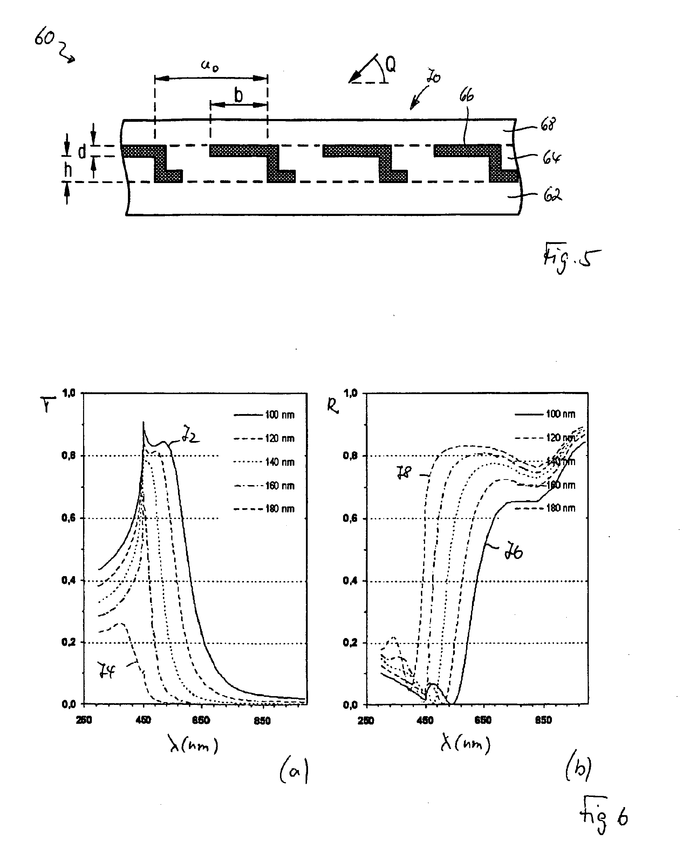

Für eine kostengünstige Herstellung der Drahtgitter bieten sich schräg bedampfte Gitter an, wie in Fig. 5 gezeigt. Das Sicherheitselement 60 enthält eine transparente Trägerfolie 62, auf die eine UV-Prägelackschicht 64 aufgedruckt und in Form eines Rechteckprofils geprägt ist, das eine Periodenlänge $a_0$ = 300 nm, eine Stegbreite b = 150 nm und eine Ganghöhe h = 200 nm aufweist. Auf die Präglackschicht 64 ist unter einem Aufdampfwinkel Q, hier Q = 45°, eine Aluminiumschicht 66 einer Dicke d, beispielsweise 60 nm, aufgedampft, so dass ein Drahtgitter 70 mit einem z-förmigen Metallprofil entsteht. Zum Schutz ist das Metallprofil des Drahtgitters 70 mit einer Schutzlackschicht 68 bzw. einer Deckfolie 23 (Fig. 2) abgedeckt.

Das Drahtgitter 70 der Fig. 5 stellt eine in die Lackschichten 64, 68 eingebettete metallische Binärstruktur dar, die ausschließlich ebene metallische Flächenabschnitte auf nur zwei verschiedenen Höhenstufen enthält (metallisches Bi-Grating). Im Allgemeinen können die metallischen Flächenabschnitte auch auf mehr als zwei Höhenniveaus, insbesondere auf n = 3 bis n = 16 verschiedenen Höhenstufen angeordnet sein und so eine allgemeinere Multilevelstruktur bilden. Bei der Verwendung von Standard-UV-Lack für die geprägte Lackschicht 64 und die Schutzlackschicht 68 liegt das Drahtgitter eingebettet in ein Dielektrikum mit Brechungsindex n = 1,5 vor.

Es wurde nun zunächst gefunden, dass Drahtgitter mit einem z-förmigen Metallprofil grundsätzlich dieselben Filtereigenschaften wie die oben beschriebenen Rechteckstrukturen aufweisen. Auch gerundete Profilformen können ähnlich starke Resonanzen wie die rechteckigen Profile aufweisen. Bei stark asymmetrischen Profilen, etwa trapezförmigen Profilen, sind die Resonanzen in der Bandpasscharakteristik dagegen schwächer ausgeprägt.

Weiter wurde gefunden, dass die Filtereigenschaften eines in ein Dielektrikum mit Brechungsindex n eingebetteten Drahtgitters den Filtereigenschaften freistehender Drahtgitter entsprechen, wobei allerdings die Resonanz bzw. das Transmissionsmaximum in der Bandpasscharakteristik um den Faktor n zu größeren Wellenlängen verschoben ist. Dieser Verschiebung ist bei dem Ausführungsbeispiel der Fig. 5 durch die Auslegung des Drahtgitters, also eine entsprechende Verkleinerung der Periodenlänge, der Stegbreite und der Ganghöhe Rechnung bereits getragen.

Zur Illustration zeigt Fig. 6(a) die Transmission eines in ein Dielektrikum mit n = 1,5 eingebetteten Bandpassfilters mit einem metallischen Drahtgitter aus einer Mehrzahl paralleler Aluminiumdrähte mit einer Gitterperiode $a_0$ = 300 nm und einer Höhe h = 200 nm für verschiedene Drahtbreiten von b = 100 nm (Transmissionskurve 72) bis b = 180 nm (Transmissionskurve 74). Die bei der Betrachtung in Durchsicht wahrgenommene Farbe der Bandpassfilter ändert dabei von Grün für b = 100 nm über ein kräftiges Blau und endet bei einer Breite von b = 180 nm schließlich bei Violett.

Die erfindungsgemäßen metallischen Drahtgitter können nicht nur in Transmission auch in Reflexion eingesetzt werden, wie anhand der Fig. 6(b) illustriert, die Reflexionskurven der eben genannten Aluminium-Drahtgitter (Gitterperiode $a_0$ = 300 nm, Höhe h = 200 nm, eingebettet in Dielektrikum) zeigt. Die bei Betrachtung in Aufsicht wahrgenommene Farbe ändert sich dabei von einem tiefen Rot für eine Drahtbreite von b = 100 nm (Reflexionskurve 76) über ein kräftiges Orange bis hin zu Gelb bei einer Breite von b = 180 nm (Reflexionskurve 78).

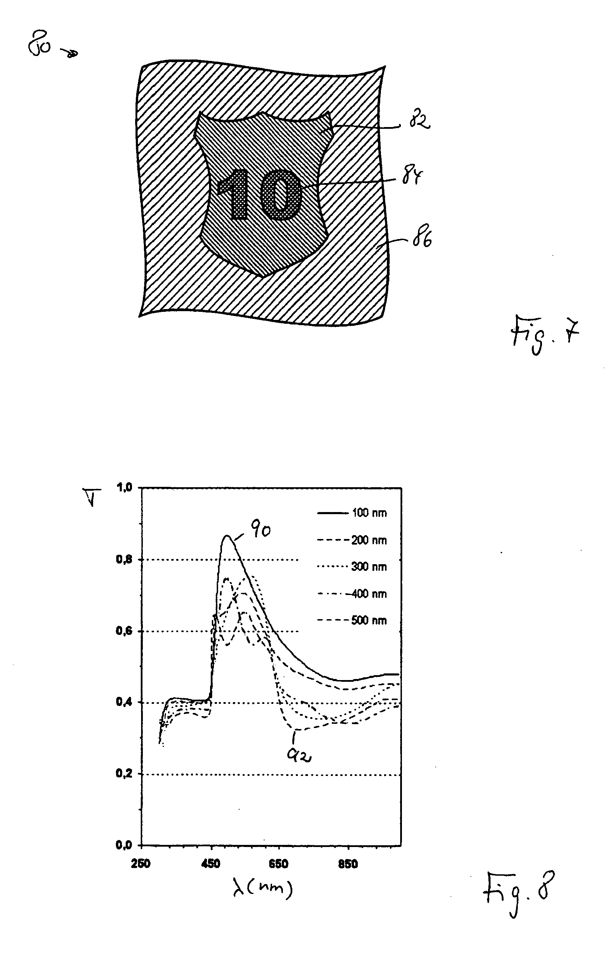

Die beschriebenen Bandpassfilter können auch zur Erzeugung farbige Motive eingesetzt werden. Beispielsweise zeigt Fig. 7 eine Aufsicht auf ein Sicherheitselement 80, das ein farbiges Motiv mit den Motivteilen Wappen 82, Ziffernfolge 84 und Hintergrund 86 zeigt. Die Ziffernfolge 84 kann beispielsweise die Denomination einer Banknote angeben. Die drei Motivteile 82, 84 und 86 sind jeweils durch Bandpassfilterbereiche mit Drahtgittern gleicher Ausrichtung, jedoch unterschiedlicher Gitterperiode bzw. unterschiedlichem Profil der Metalldrähte gebildet. Sie zeigen daher bei Durchsichtsbetrachtung in TE-polarisiertem Licht unterschiedliche Farben mit einem beim Kippen des Sicherheitselements 80 jeweils farbkonstanten visuellen Erscheinungsbild.

In anderen erfindungsgemäßen Gestaltungen sind die Drahtgitter der Motivteile 82, 84, 86 gegeneinander gedreht, so dass das Erscheinungsbild bei Betrachtung in polarisiertem Licht teilweise farbkonstant und teilweise farbvariabel ist. Beispielsweise können die Drahtgitter des Wappens 82 und des Hintergrunds 96 in einer Abwandlung der Fig. 7 um 90° gegen das Drahtgitter der Ziffernfolge 84 gedreht sein. Wird das abgewandelte Sicherheitselement 80 dann mit einem Linearpolarisator betrachtet, der für die Bereiche 82, 86 TE-polarisiertes Licht durchlässt, so erscheint das Wappen 82 und der Hintergrund 86 beim Kippen des Sicherheitselements farbkonstant, während sich der Farbeindruck der Ziffernfolge 84 beim Kippen ändert, wie in Zusammenhang mit Fig. 4 bereits beschrieben. Wird der Linearpolarisator dann um 90° gedreht, so ist das Kippverhalten vertauscht, das heißt, die Ziffernfolge 84 erscheint beim Kippen des Sicherheitselements farbkonstant, während sich der Farbeindruck des Wappens 82 und des Hintergrunds 86 verändert.

Die erfindungsgemäßen Drahtgitter können selbst in kleinen Mikrostrukturen mit Ausdehnungen von wenigen Mikrometern noch mit einer für die Farbgebung ausreichenden Zahl von Metalldrähten angeordnet werden. Typische Beispiele für solche Mikrostrukturen sind Buchstaben und Symbole, die die Mikromotivbilder einer Moiré-Vergrößerungsanordnung bilden. Die Funktionsweise und vorteilhafte Anordnungen für derartige Vergrößerungsanordnungen sind in den Druckschriften DE 10 2005 062 132 A1 und WO 2007/076952 A2 (Moiré-Vergrößerungsanordnungen), in den Anmeldungen DE 10 2007 029 203.3 und PCT/EP2008/005173 (mikrooptische Vergrößerungsanordnung vom Moirétyp) und in der Anmeldung PCT/EP2008/005172 (Modulo-Vergrößerungsanordnungen) beschrieben, deren Offenbarungsgehalt insoweit in die vorliegende Anmeldung aufgenommen wird.

Falls unpolarisiertes Licht auf ein erfindungsgemäßes Drahtgitter fällt, so liegen beide fundamentalen Fälle der Polarisation vor. Die Resonanzwellenlänge der TE-Polarisation hängt dabei insbesondere von der Breite der Zwischenräume zwischen den Metalldrähten ab, die Resonanzwellenlänge der TM-Polarisation ist dagegen von der Drahthöhe abhängig. Nun können die Drahtprofilparameter so aufeinander abgestimmt werden, dass sich ein Transmissionsmaximum für unpolarisiertes Licht ausprägt, ein Bereich des sichtbaren Spektrums bevorzugt transmittiert und somit eine Farbe erzeugt wird. Figur 8 zeigt beispielhaft die berechnete Transmission von unpolarisiertem Licht bei senkrechtem Einfallswinkel für ein in ein Dielektrikum mit n = 1,5 eingebettetes Aluminium-Drahtgitter mit einer Gitterperiode $a_0$ = 300 nm und einer Breite b = 100 nm für verschiedene Drahthöhen von h = 100 nm (Transmissionskurve 90) bis h = 500 nm (Transmissionskurve 92). Unabhängig von der Drahthöhe weist das gezeigte Drahtgitter im unpolarisierten Licht in Durchsicht eine grüne Farbe auf.

Die Unabhängigkeit der Farbe von der Drahthöhe rührt dabei daher, dass bei den gewählten Gitterparametern (Breite b = 100 nm deutlich kleiner als die Breite der Zwischenräume $a_0$ - b = 200 nm) die Transmission für TE-polarisiertes Licht deutlich höher als die Transmission für TM-polarisiertes Licht ist. Dabei liegt die Farbe für TE- polarisiertes Licht unabhängig von der Drahthöhe im blau-grünen Bereich, während die Farbe für TM-polarisiertes Licht mit der Drahthöhe im gelb/orangen Bereich variiert. Durch die Überlagerung beider Polarisationen ergibt sich eine grüne Farbe, die aufgrund des deutlich höheren Transmissionsanteils des TE- polarisierten Lichts für unterschiedliche Drahthöhen kaum mehr variiert.

Ein besonderer Vorteil der erfindungsgemäßen Bandpassfilter zeigt sich beim Einsatz in einem konvergenten Strahlengang. Bei der Farberzeugung durch Resonanzen in TM-Polarisation bzw. durch Oberflächenplasmon-Polaritonanregung ist die Lage der Resonanzmaxima stark vom Einfallswinkel abhängig. Wird ein Drahtgitter also etwa über Linsen, Mikrolinsen oder dergleichen in TM-Polarisation beleuchtet, oder das transmittierte oder reflektierte Licht über Linsen, Mikrolinsen oder dergleichen betrachtet, so schwächt sich der erzeugte Farbton durch Überlagerung der Resonanzmaxima für die unterschiedlichen Einfallswinkel deutlich ab.

Dagegen ist die Lage des Transmissions- bzw. Reflexionspeaks in TE-Polarisation praktisch nicht vom Einfallswinkel abhängig. Werden die Gitterparameter eines Drahtgitters daher so gewählt, dass die Resonanz in TE-Polarisation der dominierende Effekt der Farbgebung ist, so ist der erzeugte Farbton unabhängig vom Einfallswinkel. Dabei dominiert die Transmission der TE-Polarisation wenn die Breite der Metalldrähte kleiner als die Breite der Zwischenräume zwischen den Metalldrähten ist. Für zunehmend breitere Drähte wird dagegen der Einfluss der TM-Polarisation stärker.

Wird Licht auf das Gitter beispielsweise mit einer Linse fokussiert, so dass die konvergenten Lichtstrahlen das Gitter mit unterschiedlichen Einfallswinkeln durchqueren, so ist das transmittierte bzw. das reflektierte Licht trotz der unterschiedlichen Einfallswinkel farbig.

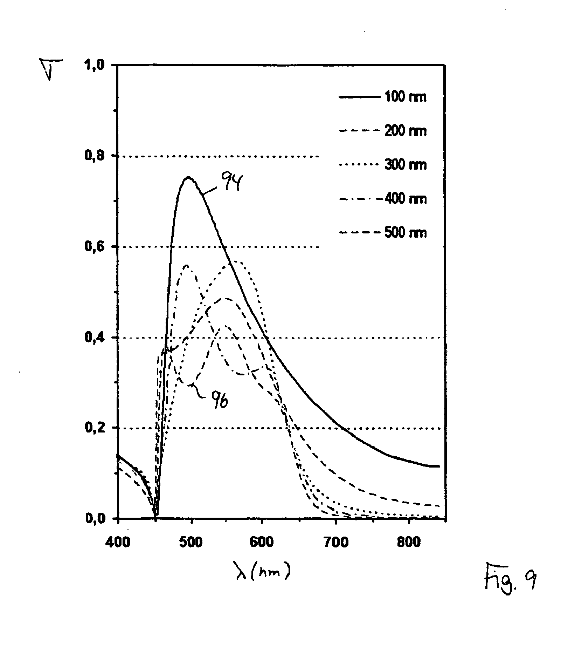

Eine weitere Einsatzmöglichkeit besteht darin, ein Bandpassfilter durch zwei, um 90° gegeneinander gedrehte, übereinander angeordneten Drahtgitter zu erzeugen. Figur 9 zeigt die berechnete Transmission von unpolarisiertem Licht bei senkrechtem Einfallswinkel für eine Struktur mit zwei übereinanderliegenden Drahtgittern mit den Parametern von Fig. 8, die gegeneinander um 90° gedreht sind für verschiedene Drahthöhen von h = 100 nm (Transmissionskurve 94) bis h = 500 nm (Transmissionskurve 96).

Die Anordnung mit zwei gekreuzten Drahtgittern zeigt eine noch bessere Filterwirkung für unpolarisiertes Licht als das einzelne Gitter von Fig. 8. Insbesondere die transmittierte Farbe ist intensiver als die des Gitters von Fig. 8. Ein optimales Transmissionsverhalten im Bandpass liegt vor, wenn das Resonanzmaximum der TE-Polarisation mit einem Resonanzmaximum in TM-Polarisation zusammenfällt. Eine solche Optimierung ist einfach möglich, da die Lage der Resonanzwellenlänge in TE-Polarisation von der Drahtbreite abhängt, jedoch kaum von der Drahthöhe. Die Resonanzwellenlänge in TM-Polarisation hängt dagegen in erster Linie von der Drahthöhe ab. In einer weiteren optimierten Variante kann das Drahtprofil beider Gitter auch unterschiedlich ausgelegt sein, wodurch eine noch intensivere Farbe erzeugt werden kann.

## Patentansprüche

1. Sicherheitselement für Sicherheitspapiere, Wertdokumente und dergleichen, mit einem Bandpassfilter für Licht aus dem sichtbaren Spektralbereich, das ein metallisches Drahtgitter aus einer Mehrzahl paralleler, beabstandet angeordneter Metalldrähte umfasst, wobei
die Gitterperiode des metallischen Drahtgitters zwischen 200 nm und 700 nm liegt, die Breite der Zwischenräume zwischen den Metalldrähten zwischen 100 nm und 400 nm liegt, die Höhe der Metalldrähte zwischen 100 nm und 2000 nm liegt und die Breite der Metalldrähte kleiner als die Breite der Zwischenräume zwischen den Metalldrähten ist und das Bandpassfilter in ein Dielektrikum eingebettet ist und beim Kippen des Sicherheitselements in, bezogen auf die Ausrichtung der Metalldrähte, TE-polarisiertem Licht ein farbkonstantes visuelles Erscheinungsbild zeigt und beim Kippen des Sicherheitselements in, bezogen auf die Ausrichtung der Metalldrähte, TMpolarisiertem Licht ein farbvariables visuelles Erscheinungsbild zeigt.

2. Sicherheitselement nach Anspruch 1, **dadurch gekennzeichnet, dass** das Bandpassfilter im sichtbaren Spektralbereich ein Transmissionsmaximum mit einer Transmission von 40% oder mehr, bevorzugt von 50% oder mehr, besonders bevorzugt von 60% oder mehr aufweist.

3. Sicherheitselement nach Anspruch 1, **dadurch gekennzeichnet, dass** das Bandpassfilter zwischen ein dielektrisches Substrat und ein dielektrisches Superstrat eingebettet ist, wobei sich die Brechungsindices von Substrat und Superstrat im sichtbaren Spektralbereich um weniger als 0,1 unterscheiden.

4. Sicherheitselement nach wenigstens einem der Ansprüche 1 bis 3, **dadurch gekennzeichnet, dass** das metallische Drahtgitter einen rechteckigen Querschnitt aufweist.

5. Sicherheitselement nach wenigstens einem der Ansprüche 1 bis 3, **dadurch gekennzeichnet, dass** das metallische Drahtgitter ein z-förmiges Metallprofil aufweist.

6. Sicherheitselement nach wenigstens einem der Ansprüche 1 bis 3, **dadurch gekennzeichnet, dass** das metallische Drahtgitter durch eine Metallschicht mit einer Mehrzahl paralleler Schlitze gebildet ist.

7. Sicherheitselement nach wenigstens einem der Ansprüche 1 bis 6, **dadurch gekennzeichnet, dass** das metallische Drahtgitter als Binärstruktur oder als Multilevelstruktur ausgebildet ist, die ausschließlich ebene metallische Flächenabschnitte auf N verschiedenen Höhenstufen enthält, wobei N gleich 2 ist oder zwischen 3 und 16 liegt.

8. Sicherheitselement nach wenigstens einem der Ansprüche 1 bis 7, **dadurch gekennzeichnet, dass** das Sicherheitselement auf Betrachtung in Durchsicht ausgelegt ist und in TE-polarisiertem Licht in Durchsicht ein farbiges, beim Kippen des Sicherheitselements farbkonstantes visuelles Erscheinungsbild zeigt.

9. Sicherheitselement nach wenigstens einem der Ansprüche 1 bis 7, **dadurch gekennzeichnet, dass** das Sicherheitselement auf Betrachtung in Aufsicht ausgelegt ist und in TE-polarisiertem Licht in Aufsicht ein farbiges, beim Kippen des Sicherheitselements farbkonstantes visuelles Erscheinungsbild zeigt.

10. Sicherheitselement nach einem der Ansprüche 1 bis 9, **dadurch gekennzeichnet, dass** das Sicherheitselement ein farbiges Motiv mit Motivteilen unterschiedlicher Farbe zeigt, wobei die Motivteile durch Bandpassfilter mit unterschiedlicher Breite der Zwischenräume zwischen den Metalldrähten und/oder unterschiedlichem Profil der Metalldrähte des jeweiligen metallischen Drahtgitters gebildet sind.

11. Sicherheitselement nach Anspruch 1, **dadurch gekennzeichnet, dass** das farbige Motiv ein Mikromotiv ist und das Sicherheitselement weiter eine Anordnung von Mikrolinsen zur vergrößerten Betrachtung des Mikromotivs enthält.

12. Sicherheitselement nach wenigstens einem der Ansprüche 1 bis 11, **dadurch gekennzeichnet, dass** das Bandpassfilter zwei übereinander angeordnete, parallel oder in der Ausrichtung der Metalldrähte gegeneinander gedrehte Drahtgitter enthält.

13. Sicherheitselement nach wenigstens einem der Ansprüche 1 bis 11, **dadurch gekennzeichnet, dass** das Bandpassfilter mit einem Linearpolarisator kombiniert ist, vorzugsweise einem Linearpolarisator, der bezogen auf die Ausrichtung der Metalldrähte des Drahtgitters TE-polarisiertes Licht durchlässt.

14. Datenträger mit einem Sicherheitselement nach einem der Ansprüche 1 bis 13, der bevorzugt ein Wertdokument, insbesondere eine Banknote ist.

15. Datenträger nach Anspruch 14, **dadurch gekennzeichnet, dass** auf dem Datenträger das Bandpassfilter und ein Linearpolarisator angeordnet sind, und Bandpassfilter und Linearpolarisator zur Echtheitsprüfung durch Biegen, Falten, Knicken oder Klappen des Datenträgers übereinander legbar sind.

16. Verfahren zur Echtheitsprüfung eines Sicherheitselements nach einem der Ansprüche 1 bis 13, bei dem das Sicherheitselement in linear polarisiertem Licht gekippt und der Farbeindruck des Sicherheitselements beim Kippen erfasst wird, und bei dem ein farbkonstantes visuelles Erscheinungsbild als Zeichen der Echtheit des Sicherheitselements gewertet wird.

17. Verfahren nach Anspruch 16, **dadurch gekennzeichnet, dass** zur Erzeugung des linear polarisierten Lichts ein Linearpolarisator auf das Sicherheitselement gelegt wird und der Farbeindruck der Anordnung aus Linearpolarisator und Sicherheitselement erfasst wird.

18. Verfahren zur Echtheitsprüfung eines Sicherheitselements nach einem der Ansprüche 1 bis 13, bei dem das Sicherheitselement nacheinander in linear polarisiertem Licht einer ersten Polarisationsrichtung und einer zweiten, zur ersten Polarisationsrichtung senkrechten Polarisationsrichtung gekippt und jeweils der Farbeindruck des Sicherheitselements beim Kippen erfasst wird, und bei dem ein farbkonstantes visuelles Erscheinungsbild bei einer der beiden Polarisationsrichtungen und ein farbvariables visuelles Erscheinungsbild bei der anderen der beiden Polarisationsrichtungen als Zeichen der Echtheit des Sicherheitselements gewertet werden.

19. Verfahren nach Anspruch 18, **dadurch gekennzeichnet, dass** zur Erzeugung des linear polarisierten Lichts der ersten und zweiten Polarisationsrichtung ein Linearpolarisator in zueinander um 90° gedrehten Orientierungen auf das Sicherheitselement gelegt wird und jeweils der Farbeindruck der Anordnung aus Linearpolarisator und Sicherheitselement erfasst wird.

20. Verfahren zur Echtheitsprüfung eines Sicherheitselements nach einem der Ansprüche 1 bis 13, bei dem das Sicherheitselement zwischen zwei, um 90° gegeneinander gedrehte Linearpolarisatoren gebracht wird, der Farbeindruck des Sicherheitselements beim Drehen erfasst wird, und bei dem ein vorbestimmter Farbeindruck bei einer vorbestimmten Drehstellung als Zeichen der Echtheit des Sicherheitselements gewertet wird.

## Claims

1. A security element for security papers, value documents and the like, having a band-pass filter for light from the visible spectral range, that comprises a metallic wire lattice composed of a plurality of parallel metal wires arranged spaced apart, the lattice period of the metallic wire lattice being between 200 nm and 700 nm, the width of the spaces between the metal wires being between 100 nm and 400 nm, the height of the metal wires being between 100 nm and 2000 nm, and the width of the metal wires being less than the width of the spaces between the metal wires, and the band-pass filter being embedded in a dielectric and displaying, when the security element is tilted in light that is TE polarized with respect to the orientation of the metal wires, a color-constant visual appearance, and displaying, when the security element is tilted in light that is TM polarized with respect to the orientation of the metal wires, a color-variable visual appearance.

2. The security element according to claim 1, **characterized in that** the band-pass filter exhibits, in the visible spectral range, a transmission maximum having a transmission of 40% or more, preferably of 50% or more, particularly preferably of 60% or more.

3. The security element according to claim 1, **characterized in that** the band-pass filter is embedded between a dielectric substrate and a dielectric superstrate, the refractive indices of the substrate and superstrate in the visible spectral range differing by less than 0.1.

4. The security element according to at least one of claims 1 to 3, **characterized in that** the metallic wire lattice exhibits a rectangular cross section.

5. The security element according to at least one of claims 1 to 3, **characterized in that** the metallic wire lattice exhibits a z-shaped metal profile.

6. The security element according to at least one of claims 1 to 3, **characterized in that** the metallic wire lattice is formed by a metal layer having a plurality of parallel slits.

7. The security element according to at least one of claims 1 to 6, **characterized in that** the metallic wire lattice is developed as a binary structure or as a multilevel structure that includes exclusively planar metallic areal sections on N different height levels, where N equals 2 or is between 3 and 16.

8. The security element according to at least one of claims 1 to 7, **characterized in that** the security element is designed for looking through, and in TE-polarized light, when looked through, displays a colored visual appearance that is color-constant when the security element is tilted.

9. The security element according to at least one of claims 1 to 7, **characterized in that** the security element is designed for viewing in top view, and in TE-polarized light, in top view, displays a colored visual appearance that is color-constant when the security element is tilted.

10. The security element according to one of claims 1 to 9, **characterized in that** the security element displays a colored motif having motif portions of different colors, the motif portions being formed by band-pass filters having different widths of the spaces between the metal wires and/ or different profiles of the metal wires of the respective metallic wire lattice.

11. The security element according to claim 1, **characterized in that** the colored motif is a micromotif and the security element further includes an arrangement of microlenses for the magnified viewing of the micromotif.

12. The security element according to at least one of claims 1 to 11, **characterized in that** the band-pass filter includes two wire lattices that are stacked, parallel or rotated against each other in the orientation of the metal wires.

13. The security element according to at least one of claims 1 to 11, **characterized in that** the band-pass filter is combined with a linear polarizer, preferably a linear polarizer that transmits light that is TE polarized with respect to the orientation of the metal wires of the wire lattice.

14. A data carrier having a security element according to one of claims 1 to 13 that is preferably a value document, especially a banknote.

15. The data carrier according to claim 14, **characterized in that** the band-pass filter and a linear polarizer are arranged on the data carrier, and the band-pass filter and linear polarizer are layable one on top of another by bending, creasing, buckling or folding the data carrier to check the authenticity.

16. A method for checking the authenticity of a security element according to one of claims 1 to 13, in which the security element is tilted in linearly polarized light and the color impression of the security element upon tilting is detected, and in which a color-constant visual appearance is classified as a sign of the authenticity of the security element.

17. The method according to claim 16, **characterized in that**, to produce the linearly polarized light, a linear polarizer is laid on the security element and the color impression of the arrangement of the linear polarizer and the security element is detected.

18. A method for checking the authenticity of a security element according to one of claims 1 to 13, in which the security element is tilted, in succession, in linearly polarized light of a first polarization direction and of a second polarization direction that is perpendicular to the first polarization direction and, in each case, the color impression of the security element upon tilting is detected, and in which a color-constant visual appearance for one of the two polarization directions and a color-variable visual appearance for the other of the two polarization directions is classified as a sign of the authenticity of the security element.

19. The method according to claim 18, **characterized in that**, to produce the linearly polarized light of the first and second polarization directions, a linear polarizer is laid on the security element in orientations that are rotated 90° toward each other, and in each case, the color impression of the arrangement of the linear polarizer and the security element is detected.

20. The method for checking the authenticity of a security element according to one of claims 1 to 13, in which the security element is brought between two linear polarizers that are rotated 90° against each other, the color impression of the security element upon rotating is detected, and in which a predetermined color impression at a predetermined rotation position is classified as a sign of the authenticity of the security element.

**Revendications**

1. Elément de sécurité pour des papiers de sécurité, des documents de valeur et similaires, avec un filtre passe-bande pour de la lumière dans la plage spectrale visible, lequel comprend un réseau métallique formé par une pluralité de fils métalliques parallèles disposés de manière espacée, dans lequel la période de réseau du réseau métallique est comprise entre 200 nm et 700 nm, la largeur des espaces intermédiaires entre les fils métalliques étant comprise entre 100 nm et 400 nm, la hauteur des fils métalliques étant comprise entre 100 nm et 2000 nm et la largeur des fils métalliques étant inférieure à la largeur des espaces intermédiaires entre les fils métalliques, et le filtre passe-bande étant intégré dans un diélectrique et montrant, lors de l'inclinaison de l'élément de sécurité dans de la lumière à polarisation TE compte tenu de l'orientation des fils métalliques, un aspect visuel à constance de couleur et lors de l'inclinaison de l'élément de sécurité dans de la lumière à polarisation TM compte tenu de l'orientation des fils métalliques, un aspect visuel à variation de couleur.

2. Elément de sécurité selon la revendication 1, **caractérisé en ce que** le filtre passe-bande dans la plage spectrale visible présente un maximum de transmission avec une transmission de 40% ou plus, de préférence de 50% ou plus, de manière particulièrement préférée de 60% ou plus.

3. Elément de sécurité selon la revendication 1, **caractérisé en ce que** le filtre passe-bande est intégré entre un substrat diélectrique et un superstrat diélectrique, moyennant quoi les indices de réfraction du substrat et du superstrat dans la plage spectrale visible se distinguent de l'ordre de moins de 0,1.

4. Elément de sécurité selon l'une au moins des revendications 1 à 3, **caractérisé en ce que** le réseau métallique présente une section transversale rectangulaire.

5. Elément de sécurité selon l'une au moins des revendications 1 à 3, **caractérisé en ce que** le réseau métallique présente un profil métallique en forme de z.

6. Elément de sécurité selon l'une au moins des revendications 1 à 3, **caractérisé en ce que** le réseau métallique est formé par une couche métallique avec une pluralité de fentes parallèles.

7. Elément de sécurité selon l'une au moins des revendications 1 à 6, **caractérisé en ce que** le réseau métallique est réalisé en tant que structure binaire ou en tant que structure multi-niveaux, laquelle contient exclusivement des parties de surface métalliques planes sur N différents niveaux de hauteur, N étant égal à 2 ou étant compris entre 3 et 16.

8. Elément de sécurité selon l'une au moins des revendications 1 à 7, **caractérisé en ce que** l'élément de sécurité est étudié pour être observé en transparence et montre, lors de l'observation en transparence avec de la lumière à polarisation TE, un aspect visuel coloré à constance de couleur lors de l'inclinaison de l'élément de sécurité.

9. Elément de sécurité selon l'une au moins des revendications 1 à 7, **caractérisé en ce que** l'élément de sécurité est étudié pour l'observation par réflexion et montre, en observation par réflexion avec de la lumière à polarisation TE, un aspect visuel coloré à constance de couleur lors de l'inclinaison de l'élément de sécurité.

10. Elément de sécurité selon l'une des revendications 1 à 9, **caractérisé en ce que** l'élément de sécurité montre un motif coloré avec des éléments de motif de couleurs différentes, les éléments de motif étant formés par des filtres passe-bande à largeur différente des espaces intermédiaires entre les fils métalliques et/ou à profil différent des fils métalliques du réseau métallique respectif.

11. Elément de sécurité selon la revendication 1, **caractérisé en ce que** le motif coloré est un micromotif et **en ce que** l'élément de sécurité présente en outre un agencement de microlentilles pour l'observation agrandie du micro-motif.

12. Elément de sécurité selon l'une au moins des revendications 1 à 11, **caractérisé en ce que** le filtre passe-bande contient deux réseaux disposés l'un au-dessus de l'autre, parallèles ou tournés de manière antagoniste concernant l'orientation des fils métalliques.

13. Elément de sécurité selon l'une au moins des revendications 1 à 11, **caractérisé en ce que** le filtre passe-bande est combiné avec un polarisateur linéaire, de préférence un polarisateur linéaire, lequel laisse passer de la lumière à polarisation TE compte tenu de l'orientation des fils métalliques du réseau.

14. Support de données avec un élément de sécurité selon l'une des revendications 1 à 13, lequel est de préférence un document de valeur, en particulier un billet de banque.

15. Support de données selon la revendication 14, **caractérisé en ce que** le filtre passe-bande et un polarisateur linéaire sont disposés sur le support de données, et **en ce qu'**il est possible de disposer le filtre passe-bande et le polarisateur linéaire l'un au-dessus de l'autre en recourbant, pliant, repliant ou rabattant, pour le contrôle de l'authenticité.

16. Procédé pour le contrôle de l'authenticité d'un élément de sécurité selon l'une des revendications 1 à 13, dans lequel l'élément de sécurité est incliné dans de la lumière polarisée linéairement et l'impression colorée de l'élément de sécurité étant détectée lors de l'inclinaison, et dans lequel un aspect visuel à constante de couleur est considéré en tant que signe de l'authenticité de l'élément de sécurité.

17. Procédé selon la revendication 16, **caractérisé en ce que**, pour la génération de la lumière polarisée linéairement, on pose un polarisateur linéaire sur l'élément de sécurité et **en ce que** l'on détecte l'impression colorée de l'agencement formé par le polarisateur linéaire et l'élément de sécurité.

18. Procédé pour le contrôle de l'authenticité d'un élément de sécurité selon l'une des revendications 1 à 13, dans lequel l'élément de sécurité est incliné successivement dans de la lumière polarisée linéairement d'une première direction de polarisation et d'une deuxième direction de polarisation perpendiculaire à la première direction de polarisation, et en ce que l'impression colorée de l'élément de sécurité est respectivement détectée lors de l'inclinaison, et dans lequel un aspect visuel à constance de couleur avec l'une des deux directions de polarisation et un aspect visuel à variation de couleur avec l'autre des deux directions de polarisation sont considérés comme étant un signe de l'authenticité de l'élément de sécurité.

19. Procédé selon la revendication 18, **caractérisé en ce que**, pour la génération de la lumière polarisée linéairement de la première et de la deuxième direction de polarisation, on pose un polarisateur linéaire selon des orientations tournées de 90° l'une par rapport à l'autre sur l'élément de sécurité et **en ce que** l'on détecte respectivement l'impression colorée de l'agencement formé par le polarisateur linéaire et l'élément de sécurité.

20. Procédé pour le contrôle de l'authenticité d'un élément de sécurité selon l'une des revendications 1 à 13, dans lequel l'élément de sécurité est amené entre deux polarisateurs linéaires tournés de manière antagoniste de l'ordre de 90° l'un par rapport à l'autre, l'impression colorée de l'élément de sécurité est détectée lors de la rotation, et dans lequel une impression colorée prédéterminée avec une position de rotation prédéterminée est considérée comme étant un signe de l'authenticité de l'élément de sécurité.

Fig. 1

Fig. 2

Fig. 3

Fig. 4

Fig. 5

(a)

(b)

Fig 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005062132 A1
- WO 2007076952 A2
- DE 102007029203
- EP 2008005173 W
- EP 2008005172 W

**In der Beschreibung aufgeführte Nicht-Patentliteratur**

- **Y. SHIMOTSUMA ; P. G. KAZANSKY ; J. QIU ; K. HIRAO.** *Phys. Rev. Lett.,* 2003, vol. 91 (24), 247405